# FASCICULE DE BREVET EUROPEEN

(11) **EP 1 117 553 B1**
(45) Date de publication et mention de la délivrance du brevet: **22.09.2004**
(21) Numéro de dépôt: 00948064.1
(22) Date de dépôt: 30.06.2000
(51) Int. Cl.: B60K 15/03, B60K 15/04, F16K 31/40

(54) **LIMITEUR DE REMPLISSAGE POUR RESERVOIR CONTENANT DU GAZ LIQUEFIE TEL LE GPL**
BEGRENZUNGSVENTIL ZUR BEFÜLLUNG EINES TANKS MIT EINEM GAS WIE LPG
TOP UP LIMITER FOR TANK CONTAINING LIQUEFIED GAS SUCH AS LPG

(30) Priorité: 30.07.1999 FR 9909887
(43) Date de publication de la demande: 25.07.2001
(73) Titulaire: GIAT INDUSTRIES, 78000 Versailles (FR)
(72) Inventeur: FOUCHER, Laurent, F-19150 Pandrignes (FR); COMBES, Benoît, F-75015 Paris (FR)
(74) Mandataire: Célanie, Christian
(86) Numéro de dépôt international: PCT/FR2000/001842
(87) Numéro de publication internationale: WO 2001/008916

(56) Documents cités:
- EP-A- 0 086 154
- EP-A- 0 349 159
- EP-A- 0 884 512

## Description

Le domaine technique de la présente invention est celui des dispositifs de sûreté destinés à équiper les réservoirs contenant un fluide sous pression tel que le gaz de pétrole liquéfié (GPL) utilisé comme carburant pour les véhicules à moteurs.

Afin de réduire la pollution liée aux rejets dans l'atmosphère résultant de l'utilisation massive des véhicules automobiles, il est souhaitable de développer la consommation de carburant moins polluant tel que le GPL.

A titre d'exemple, le GPL engendre une émission de dioxyde de carbone inférieur de 40 à 75 % par rapport à l'essence. De même la quantité d'hydrocarbures imbrûlés et d'oxyde d'azote est inférieure de 30 à 65 %. Il faut également noter que ce carburant présente l'avantage de ne pas contenir d'additifs tels que le plomb, le soufre ou le benzène, dont l'émission est nuisible à la santé.

Le dispositif selon la présente invention est destiné à limiter le remplissage des réservoirs contenant des gaz liquéfiés et plus particulièrement du gaz de pétrole liquéfié utilisé par les véhicules à moteur comme carburant (GPL).

L'équilibre liquide-gazeux qui règne dans les réservoirs de GPL doit supporter les contraintes liées aux variations de température. Ces contraintes de pression peuvent être très importantes et conduire à l'explosion du réservoir, pouvant causer de sérieux dommages aux utilisateurs ainsi qu'aux secouristes.

Pour réduire ce danger, on impose une consigne et on remplit le réservoir de telle sorte que la phase liquide n'occupe pas plus de 80 % de volume total du réservoir. Les 20 % restant deviennent le ciel gazeux permettant la dilatation thermique de la phase liquide du fait des variations de la température ambiante.

Ce phénomène de dilatation peut être très important. Pour les cas des GPL, la dilatation de la phase liquide peut atteindre 21,8 % entre 0°C et 60°C. Pour être plus précis, si un utilisateur remplit son réservoir de véhicule à 80 % de GPL à une température de -15°C, après dilatation, le ciel gazeux sera réduit à 3% du volume total à 50°C.

De plus, les limiteurs de remplissage actuels dits "mécaniques" n'offrent pas une sécurité suffisante en cas de défaillance. En effet, le remplissage en phase liquide peut devenir total et le ciel gazeux est alors réduit ou nul (on parle alors de plein hydraulique). L'augmentation de volume de la phase liquide deviendrait alors impossible et provoquerait l'explosion du réservoir. Il convient donc d'avoir un limiteur de remplissage fiable pour éviter le plein hydraulique.

En outre, les limiteurs de remplissage actuels, fonctionnant sur un système de distributeur, peuvent être mis en défaut par les pompes GPL fournissant une faible pression. De plus, ces limiteurs comprennent un moyen de lutte contre les contraintes thermiques basé sur un fonctionnement à débit de fuite offrant ainsi la possibilité à un utilisateur inattentif d'augmenter l'autonomie de son véhicule. Il est alors possible de " forcer " le remplissage jusqu'à obtenir le plein hydraulique avec tous les dangers que cela comporte. Ces inconvénients doivent être surmontés.

Les limiteurs de remplissage connus sur le marché fonctionnent à partir d'un système de robinet-flotteur. Ce montage présente le désavantage de ne pas fournir une étanchéité parfaite. Par exemple un tangage latéral ou une différence de hauteur d'un véhicule peuvent altérer la stabilité du limiteur de remplissage et donc dépasser les 80 % pour finalement atteindre le plein hydraulique avec les risques que cela comporte. En bref, la fiabilité de ces limiteurs dits " mécaniques " n'est pas suffisamment importante et peut créer un danger qui ne permet pas aux secouristes d'intervenir dans de bonnes conditions.

On connaît également par le brevet EP-0884512 une vanne destinée à équiper un réservoir de véhicule contenant un fluide sous pression du type GPL. Cette vanne comporte les caractéristiques du préambule de la revendication 1, entre autres une électrovanne, un corps relié au réservoir, présentant un premier conduit en communication avec le réservoir et une membrane étanche interposée entre le corps et la tête de la vanne pour fermer le premier conduit sous l'action d'un ressort. Ce document concerne une vanne d'alimentation en carburant gazeux d'un moteur de véhicule. La fonction de cette vanne n'est pas de limiter le remplissage d'un réservoir mais de contrôler l'alimentation en gaz du moteur et éventuellement isoler le réservoir en cas de dysfonctionnement.

Le but de la présente invention est de concevoir un nouveau limiteur de remplissage dit " hydraulique " pour les réservoirs GPL, apte à assurer une isolation parfaite entre l'entrée (pistolet) et l'intérieur du réservoir, ceci tout en respectant la valeur de consigne imposée.

L'invention a donc pour objet un limiteur de remplissage destiné à équiper un réservoir de véhicule contenant un fluide sous pression du type GPL, relié à un conduit d'alimentation et à une électrovanne commandant l'arrêt du remplissage comprenant un corps relié au réservoir, présentant un premier conduit en communication avec le réservoir, le conduit d'alimentation et l'électrovanne, une tête coiffant le corps, une membrane étanche interposée entre le corps et la tête pour fermer le premier conduit sous l'action d'un ressort, des moyens de commande permettant d'introduire du fluide sous pression du corps vers la tête, en relation avec la membrane pour permettre l'ouverture et la fermeture du premier conduit, caractérisé en ce qu'il comprend un clapet anti-retour, disposé dans le premier conduit, coté réservoir.

Selon une première variante de réalisation, le premier conduit délimite un siège sur lequel s'applique la membrane.

Selon une autre variante, le corps comprend une chambre dans laquelle débouchent le premier conduit et le conduit d'alimentation.

Selon encore une autre variante, la tête comporte une cavité fermée par la membrane, le ressort étant disposé dans la cavité et en appui sur la membrane.

Avantageusement, le premier conduit est en relation avec l'électrovanne par l'intermédiaire des moyens de commande.

Selon encore une réalisation particulière, les moyens de commande comprennent :
- une première canalisation reliant le premier conduit à l'électrovanne, débouchant en amont du clapet anti-retour,
- une seconde canalisation reliant la chambre à l'électrovanne,
- une troisième canalisation reliant l'électrovanne à la cavité.

Avantageusement, la première canalisation est terminée d'un côté par une collerette délimitant une chambre, l'électrovanne venant en appui sur la collerette, les deuxième et troisième canalisations débouchant dans la chambre.

La perte de charge de la chambre et de la première canalisation est inférieure à celle de la troisième canalisation, pour repousser la membrane, l'électrovanne étant ouverte.

Lors de la fermeture de l'électrovanne le fluide sous pression est dirigé vers la cavité par l'intermédiaire de la deuxième et la troisième canalisations, pour équilibrer la pression de part et d'autre de la membrane.

Le limiteur de remplissage peut comprendre un moyen d'évacuation du fluide emprisonné dans la cavité, la chambre et le conduit d'alimentation vers le premier conduit.

Avantageusement, le moyen d'évacuation est constitué d'une canalisation reliant la cavité au premier conduit muni d'un clapet interdisant le passage du fluide sous pression du premier conduit vers la cavité au cours du remplissage.

Le clapet est actionné par l'augmentation de pression du fluide contenu dans la cavité, la chambre et le conduit d'alimentation.

La force créée par la pression d'alimentation à l'intérieur du premier conduit est supérieure à la force fournie par le ressort.

Lors du remplissage, la force créée par la pression d'alimentation à l'intérieur du premier conduit est supérieure à la force de fermeture du clapet anti-retour côté réservoir.

Avantageusement, la force exercée sur le clapet est supérieure à la force fournie par la pression dans la cavité lors de la phase de remplissage.

Un tout premier avantage du limiteur selon l'invention réside dans le fait que celui-ci est actionné de manière hydraulique.

Un deuxième avantage réside dans le fait qu'une avarie du système de remplissage provoque son arrêt.

Un autre avantage du limiteur selon l'invention réside dans le fait que celui-ci ne présente aucun débit de fuite.

Un autre avantage réside dans le fait que l'étage de traitement et l'électrovanne peuvent être commandés par un courant électrique de faible intensité offrant ainsi la possibilité de les miniaturiser.

D'autres caractéristiques, détails et avantages de l'invention ressortiront plus clairement à la lecture du complément de description donné ci-après à titre illustratif en relation avec des dessins sur lesquels :
- la figure 1 représente une vue en coupe du système d'alimentation et d'un limiteur conforme à l'invention.
- la figure 2 représente une vue en coupe d'un limiteur conforme à l'invention en position remplissage.
- la figure 3 représente une vue en coupe d'un limiteur conforme à l'invention en position blocage

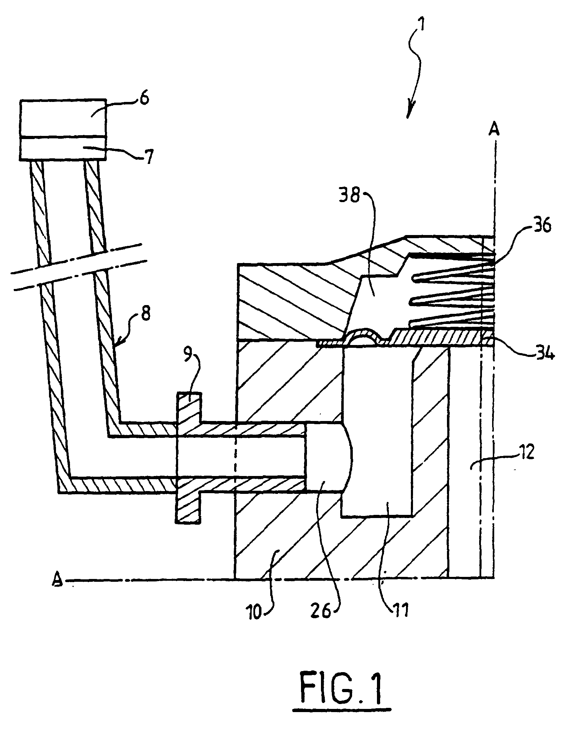

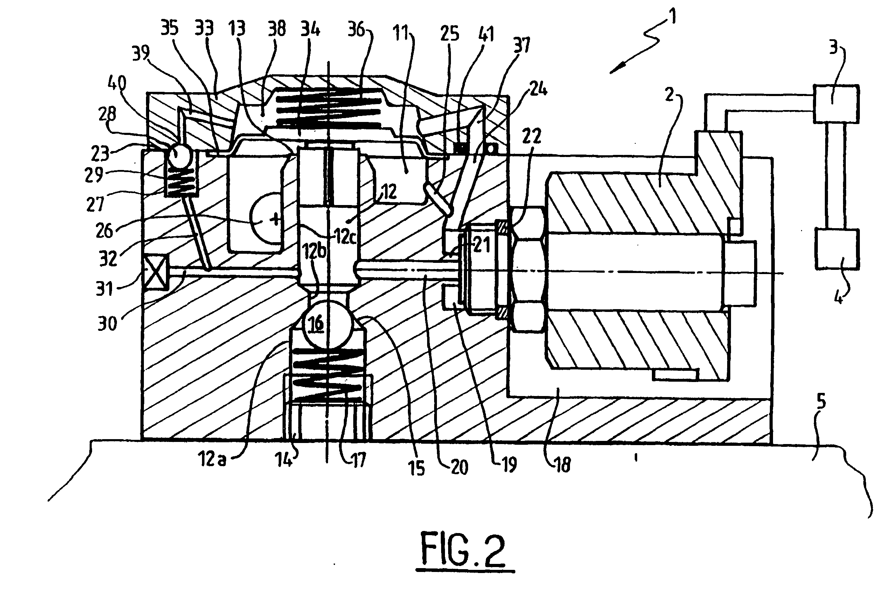

Sur les figures 1 et 2, on a représenté un limiteur 1 selon l'invention en relation avec une électrovanne 2 de type connu et un étage de traitement 3 de l'information. Cet étage 3 comprend notamment un capteur 4 commandant l'ouverture et la fermeture de l'électrovanne 2. Ce limiteur 1 est rendu solidaire d'un réservoir 5 partiellement représenté. Le limiteur 1 est connecté à une bouche d'alimentation 6 intégrant classiquement un clapet de fermeture 7 par l'intermédiaire d'une goulotte 8 suivie d'un manchon d'entrée 9. Au fin de compréhension, on admettra que dans le plan de ces figures, le réservoir 5 est disposé horizontalement tandis que le limiteur 1 est disposé sensiblement verticalement.

La figure 2 qui est une coupe longitudinale montre un limiteur constitué d'un corps 10 creux réalisé en un matériau lui conférant des propriétés de résistance aux contraintes et sollicitations auxquelles il sera soumis au cours de son utilisation. Ce corps 10 se présente sous la forme générale d'une pièce sensiblement parallélépipédique. Ce corps est perforé d'un conduit 12 transversal débouchant dans une chambre annulaire 11 dans la partie supérieure du corps 10, l'extrémité libre du conduit constituant un siège 13 en saillie dans la chambre. Cette chambre est reliée au manchon d'entrée 9 par l'intermédiaire d'un conduit 26.

Le conduit 12 est constitué de trois tronçons de diamètre différent. Le tronçon 12a est fileté du côté réservoir pour recevoir un écrou perforé 14. Un chanfrein 15 est pratiqué dans la partie supérieure de ce tronçon 12a afin de recevoir une bille 16 plaquée par ressort 17 en appui sur l'écrou 14. La bille 16 et le ressort 17 constituent un clapet anti-retour interdisant la circulation du fluide du réservoir 5 vers la chambre 11. Le tronçon 12b, d'un diamètre inférieur au tronçon 12a, délimite d'un côté le chanfrein 15 et de l'autre le tronçon 12c. Le tronçon 12c, d'un diamètre supérieur au tronçon 12b, se termine par le siège 13.

Le corps 10 est muni latéralement d'un logement 18 permettant de recevoir l'électrovanne 2. A cette fin, le corps est percé et fileté; l'électrovanne 2 et le corps 10 délimitent ainsi une cavité 19. L'étanchéité est assurée par un joint 22. Une canalisation 20 est usinée horizontalement dans le corps 10, elle débouche, d'un côté dans le conduit 12 en amont du clapet anti-retour, de l'autre dans la cavité 19. Cette canalisation 20 est terminée par une collerette 21 en saillie dans la cavité 19. En phase de limitation de remplissage, l'électrovanne 2 vient en appui sur la collerette 21 pour obstruer le conduit 20.

Une face 23 est définie sur la partie supérieure du corps 10. Une canalisation 24 est percée reliant ainsi la face 23 à la cavité 19. De même, une canalisation 25 est usinée pour relier la chambre 11 à la cavité 19. Les caractéristiques de ces canalisations seront définies ci-aprés.

A l'opposé de ces canalisations 24 et 25, par rapport au conduit 12, on pratique un lamage 27 étudié pour recevoir une bille 28, un ressort 29 venant s'intercaler entre le fond du lamage 27 et la bille 28. A l'opposé de la canalisation 20 par rapport au conduit 12, on perce un canal 30 débouchant d'un côté dans le tronçon 12c, de l'autre à l'extérieur. Pour des raisons de construction, le canal 30 est obstrué du côté extérieur par un bouchon étanche 31. Le corps 10 est traversé par un canal 32 qui relie le lamage 27 au canal 30.

Le corps 10 est coiffé par une pièce 33 de forme générale type " assiette creuse ". Entre les deux est disposée une membrane 34, de type connu, qui vient se caler dans un épaulement 35 pratiqué en périphérie de la chambre 11. L'étanchéité entre le corps et tête est réalisée au moyen de procédés connus. Un ressort 36 est interposé entre le fond de la tête 33 et la membrane 34. On définit ainsi une chambre 38 délimitée par la tête 33 et la membrane 34. La tête 33 est perforée par une canalisation 37 aux caractéristiques complexes qui relie la canalisation 24 à la chambre 38. L'étanchéité entre les canalisations 37 et 24 est réalisée par un joint 41 de type connu. A l'opposé de la canalisation 37 on réalise un canal 39 terminé par un chanfrein 40, lequel permet de recevoir la bille 28 en appui.

Les caractéristiques des canalisations 20, 24 et 37 sont définies de telle façon que la perte de charge de la canalisation 20 soit inférieure à la perte de charge de la canalisation 24 additionnée à celle de la canalisation 37, ceci à l'aide de moyens divers tels que différence de diamètre, coude, état de surface ou une combinaison de ces moyens.

En phase de remplissage, comme illustré sur les figures 1 et 2, le liquide provenant de la bouche d'alimentation 6 pénètre dans le limiteur 1 et remplit la chambre 11 par le biais du clapet 7, la goulotte 8, le manchon 9 et le conduit d'alimentation 26. Le liquide remplit ensuite la canalisation 25, la cavité 19 et s'écoule prioritairement vers la canalisation 20, ceci étant dû aux différences de perte de charge entre la canalisation 20 et les canalisations 24 et 37. De ce fait, le déséquilibre de pression entre la chambre 38 et la chambre 11 conduit au soulèvement de la membrane 34, écrasant ainsi le ressort 36, et à la libération du siège 13. Le liquide utilise alors le conduit 12 et exerce une pression pour ouvrir le clapet anti-retour constitué de la bille 16 et du ressort 17 et peut s'écouler vers le réservoir 5. Le remplissage du réservoir commence.

Dés que le réservoir est rempli à 80% de liquide, le capteur 4, qui peut être de type flotteur, capacitif ou fibre optique, délivre un signal électrique à l'étage de traitement 3. Ce dernier coupe alors l'alimentation de l'électrovanne 2 dont l'extrémité vient fermer la canalisation 20.

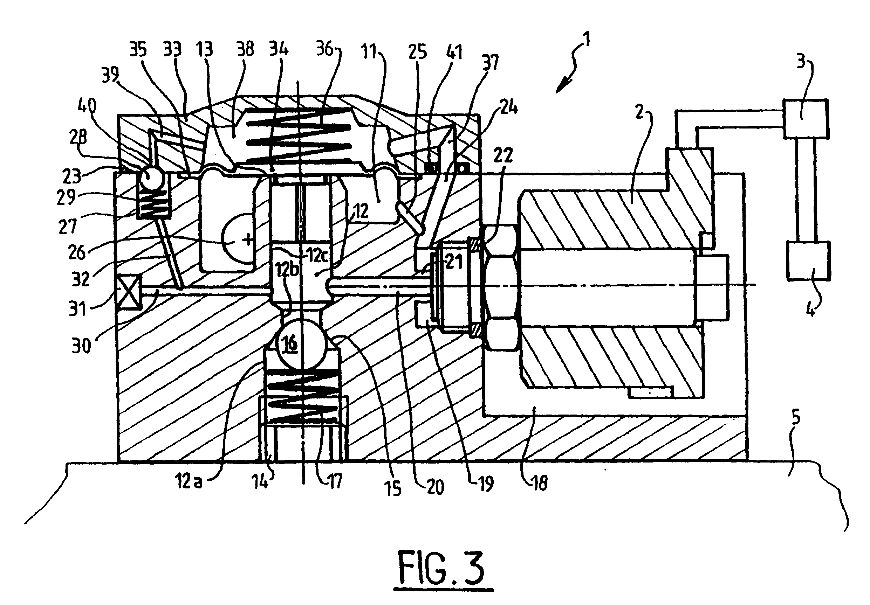

En phase limitation de remplissage, comme illustré sur la figure 3, l'électrovanne en appui sur la collerette 21 obstrue la canalisation 20. Le liquide présent dans la cavité 19, s'écoule alors vers la chambre 38 via les canalisations 24 et 37 pour équilibrer la pression de part et d'autre de la membrane 34. L'effort créé par le ressort 36 vient alors s'ajouter à l'effort engendré par la pression dans la chambre 38, plaquant ainsi la membrane 34 sur le siège 13 de manière étanche. Il n'y a plus de communication possible entre le conduit d'alimentation 26 et le réservoir 5. Le remplissage du réservoir est terminé.

Du fait de l'existence du clapet de fermeture 7 immédiatement après la bouche de remplissage 6, un volume de liquide se retrouve emprisonné dans la goulotte 8, le manchon 9, le conduit d'alimentation 26, les chambres 11 et 38, les canalisations 24, 25, 37 et la cavité 19. La bille 28 maintenue en appui dans le chanfrein 40 par le ressort 29, dont la pression de tarage est supérieure à la pression délivrée par la pompe d'alimentation, permet par translation de la bille 28 d'évacuer le liquide emprisonné vers le tronçon 12c du conduit 12.

## Revendications

1. Limiteur de remplissage (1) destiné à équiper un réservoir de véhicule contenant un fluide sous pression du type GPL, relié à un conduit d'alimentation (26) et à une électrovanne (2) commandant l'arrêt du remplissage, comprenant :
- un corps (10) relié au réservoir (5), présentant un premier conduit (12) en communication avec le réservoir (5), le conduit d'alimentation (26) et l'électrovanne (2),
- une tête (33) coiffant le corps (10),
- une membrane(34) étanche interposée entre le corps (10) et la tête (33) pour fermer le premier conduit (12) sous l'action d'un ressort (36),
- des moyens de commande permettant d'introduire du fluide sous pression du corps (10) vers la tête (33), en relation avec la membrane (34) pour permettre l'ouverture et la fermeture du premier conduit (12), **caractérisé en ce qu'**il comprend un clapet anti-retour (16,17), disposé dans le premier conduit (12), côté réservoir.

2. Limiteur de remplissage (1) selon la revendication 1, **caractérisé en ce que** le premier conduit (12) délimite un siège (13) sur lequel s'applique la membrane (34).

3. Limiteur de remplissage (1) selon la revendication 2, **caractérisé en ce que** le corps (10) comprend une première chambre (11) dans laquelle débouche le premier conduit (12) et le conduit d'alimentation (26).

4. Limiteur de remplissage (1) selon l'une quelconque des revendications 1 à 3, **caractérisé en ce que** la tête (33) comporte une deuxiéme chambre (38) fermée par la membrane (34), le ressort (36) étant disposé dans la deuxième chambre (38) et en appui sur la membrane (34).

5. Limiteur de remplissage (1) selon la revendication 3, **caractérisé en ce que** le premier conduit (12) est en relation avec l'électrovanne (2) par l'intermédiaire des moyens de commande.

6. Limiteur de remplissage (1) selon l'une des revendications 3 à 5, **caractérisé en ce que** les moyens de commande comprennent:
- une première canalisation (20) reliant le premier conduit (12) à l'électrovanne (2), débouchant en amont du clapet anti-retour (16),
- une seconde canalisation (25) reliant la première chambre (11) à l'électrovanne (2),
- une troisième canalisation (24, 37) reliant l'électrovanne (2) à la deuxième chambre (38).

7. Limiteur de remplissage (1) selon la revendication 6, **caractérisé en ce que** la première canalisation (20) est terminée d'un côté par une collerette (21) délimitant une cavité (19), l'électrovanne venant en appui sur la collerette, les deuxième (25) et troisième canalisations (24,37) débouchant dans la cavité (19).

8. Limiteur de remplissage (1) selon la revendication 7, **caractérisé en ce que** la perte de charge de la cavité (19) et de la première canalisation (20) est inférieure à celle de la troisième canalisation (24, 37), pour repousser la membrane (34), l'électrovanne (2) étant ouverte.

9. Limiteur de remplissage (1) selon la revendication 7, **caractérisé en ce que** lors de la fermeture de l'électrovanne (2) le fluide sous pression est dirigé vers la deuxième chambre (38) par l'intermédiaire de la deuxième et la troisième canalisations, pour équilibrer la pression de part et d'autre de la membrane (34).

10. Limiteur de remplissage (1) selon l'une quelconque des revendications précédentes, **caractérisé en ce qu'**il comprend un moyen d'évacuation du fluide emprisonné dans la deuxième chambre (38), la première chambre (11) et le conduit d'alimentation (26) vers le premier conduit (12).

11. Limiteur de remplissage (1) selon la revendication 10 **caractérisé en ce que** ce moyen d'évacuation est constitué de canalisations (30,32,39) reliant la cavité (38) au premier conduit (12) munie d'un clapet (28) interdisant le passage du fluide sous pression du premier conduit (12) vers la cavité (38) au cours du remplissage.

12. Limiteur de remplissage (1) selon la revendication 11, **caractérisé en ce que** le clapet (28) est actionné par l'augmentation de pression du fluide contenu dans la deuxième chambre (38), la première chambre (11) et dans le conduit d'alimentation (26).

13. Limiteur de remplissage (1) selon l'une des revendications précédentes, **caractérisé en ce que** la force créée par la pression d'alimentation à l'intérieur du premier conduit (12) est supérieure à la force fournie par le ressort (36).

14. Limiteur de remplissage (1) selon la revendication 13, **caractérisé en ce que** lors du remplissage, la force créée par la pression d'alimentation à l'intérieur du premier conduit (12) est supérieure à la force de fermeture du clapet anti-retour (16, 17), côté réservoir.

15. Limiteur de remplissage (1) selon la revendication 14, **caractérisé en ce que** la force exercée sur le clapet (28) est supérieure à la force fournie par la pression dans la cavité (38), lors de la phase de remplissage.

## Patentansprüche

1. Auffüll-Begrenzer (1), der dafür vorgesehen ist, einen Fahrzeugtank, der ein unter Druck stehendes Fluid vom Typ LPG enthält, auszurüsten, und der mit einem Versorgungskanal (26) und einem Elektroventil (2), das die Sperrung des Auffüllens steuert, verbunden ist, indem er:
- einen mit dem Tank (5) verbundenen Körper (10), der einen ersten, mit dem Tank (5), dem Versorgungskanal (26) und dem Elektroventil (2) in Verbindung stehenden Kanal (12) aufweist,
- einen den Körper (10) überdeckender Kopf (33),
- eine undurchlässige Membran (34), die zwischen dem Körper (10) und dem Kopf (33) eingefügt ist, um den ersten Kanal (12) unter der Einwirkung einer Feder (36) zu schließen,
- Steuermittel die es erlauben, unter Druck stehendes Fluid vom Körper (10) zum Kopf (33) hin im Zusammenhang mit der Membran (34) einzuführen, um das Öffnen und Schließen des ersten Kanals (12) zu erlauben,
umfasst, **dadurch gekennzeichnet, dass** er ein in dem ersten Kanal (12) tankseitig angeordnetes Rückschlagventil (16, 17) enthält.

2. Auffüll-Begrenzer (1) nach Anspruch 1, **dadurch gekennzeichnet, dass** der erste Kanal (12) einen Sitz (13) abgrenzt, an den sich die Membran (34)anlegt.

3. Auffüll-Begrenzer (1) nach Anspruch 2, **dadurch gekennzeichnet, dass** der Körper (10) eine erste Kammer (11) umfasst, in die der erste Kanal (12) und der Versorgungskanal (26) münden.

4. Auffüll-Begrenzer (1) nach irgendeinem der Ansprüche 1 bis 3, **dadurch gekennzeichnet, dass** der Kopf (33) einen durch die Membran (34) geschlossenen zweiten Kammer (38) umfasst, wobei die Feder (36) in dem zweiten Kammer (38) angeordnet ist und sich an der Membran (34) abstützt.

5. Auffüll-Begrenzer (1) nach Anspruch 3, **dadurch gekennzeichnet, dass** der erste Kanal (12) mit Hilfe der Steuermittel mit dem Elektroventil (2) in Verbindung steht.

6. Auffüll-Begrenzer (1) nach einem der Ansprüche 3 bis 5, **dadurch gekennzeichnet, dass** die Steuermittel:
- eine erste Kanalisation (20), die den ersten Kanal (12) mit dem Elektroventil (2) verbindet und stromaufwärts vom Rückschlagventil (16) einmündet,
- eine zweite Kanalisation (25), die die erste Kammer (11) mit dem Elektroventil (2) verbindet,
- eine dritte Kanalisation (24, 37), die das Elektroventil (2) mit dem zweiten Kammer (38) verbindet,
umfassen.

7. Auffüll-Begrenzer (1) nach Anspruch 6, **dadurch gekennzeichnet, dass** die erste Kanalisation (20) an einer Seite durch einen, eine Hohlraum (19) abgrenzenden Kragen (21) abgeschlossen wird, wobei sich das Elektroventil auf dem Kragen abstützt und die zweite (25) und dritte Kanalisationen (24, 37) in die Hohlraum (19) einmünden.

8. Auffüll-Begrenzer (1) nach Anspruch 7, **dadurch gekennzeichnet, dass** der Druckverlust der Hohlraum (19) und der ersten Kanalisation (20) kleiner als der der dritten Kanalisation (24, 37) ist, um die Membran (34) zurückzudrücken, wenn das Elektroventil (2) offen ist.

9. Auffüll-Begrenzer (1) nach Anspruch 7, **dadurch gekennzeichnet, dass** beim Schließen des Elektroventils (2) das unter Druck stehende Fluid mittels den zweiten und dritten Kanalisationen zum zweiten Kammer (38) hin geleitet wird, um den Druck beiderseits der Membran (34) ins Gleichgewicht zu bringen.

10. Auffüll-Begrenzer (1) nach irgendeinem der vorhergehenden Ansprüche, **dadurch gekennzeichnet, dass** er ein Mittel zum Ablassen von im zweiten Kammer (38), in der ersten Kammer (11) und im Versorgungskanal (26) eingesperrtem Fluid zum ersten Kanal (12) umfasst.

11. Auffüll-Begrenzer (1) nach Anspruch 10, **dadurch gekennzeichnet, dass** dieses Ablass-Mittel von Kanalisationen (30, 32, 39) gebildet wird, die den Hohlraum (38) mit dem ersten Kanal (12) verbindet, der mit einem Sperrventil (28) versehen ist, das den Durchfluss von unter Druck stehendem Fluid vom ersten Kanal (12) zum Hohlraum (38) hin im Laufe des Auffüllens unterbindet.

12. Auffüll-Begrenzer (1) nach Anspruch 11, **dadurch gekennzeichnet, dass** das Sperrventil (28) durch die Druckerhöhung des im zweiten Kammer (38), in der ersten Kammer (11) und im Versorgungskanal (26) enthaltenen Fluids betätigt wird.

13. Auffüll-Begrenzer (1) nach einem der vorhergehenden Ansprüche, **dadurch gekennzeichnet, dass** die durch den Versorgungsdruck im Inneren des ersten Kanals (12) erzeugte Kraft größer als die durch die Feder (36) gelieferte Kraft ist.

14. Auffüll-Begrenzer (1) nach Anspruch 13, **dadurch gekennzeichnet, dass** beim Auffüllen die durch den Versorgungsdruck erzeugte Kraft im Inneren des ersten Kanals (12) größer als die Schließkraft des tankseitigen Rückschlagventils (16, 17) ist.

15. Auffüll-Begrenzer (1) nach Anspruch 14, **dadurch gekennzeichnet, dass** die auf das Sperrventil (28) ausgeübte Kraft größer als die durch den Druck im Hohlraum (38) während der Auffüll-Phase gelieferte Kraft ist.

## Claims

1. A shut-off device (1) intended to equip a vehicle containing a pressurised fluid of the LPG type, connected to a supply duct (26) and to an electrovalve (2) controlling filling shut-off and comprising:
- a body (10) connected to the tank (5) that has a first duct (12) communicating with the tank (5), the supply duct (26) and the electrovalve 2),
- a head (33) capping the body (10),
- a sealed membrane (34) placed between the body (10) and the head (33) to close off the first duct (12) under the action of a spring (36),
- control means allowing pressurised fluid to be introduced from the body (10) to the head (33), in relation with the membrane (34) to allow the opening and closing of the first duct (12), wherein it comprises a non return valve (16, 17), arranged in the first duct (12) on the tank side.

2. A shut-off device (1) according to Claim 1, wherein the first duct (12) delimits a seat (13) onto which the membrane (34) is applied.

3. A shut-off device (1) according to Claim 2, wherein the body (10) comprises a first chamber (11) into which the first duct (12) and the supply duct (26) open out.

4. A shut-off device (1) according to any one of Claims 1 to 3, wherein the head (33) incorporates a second chamber (38) closed by the membrane (34), the spring (36) being placed in the second chamber (38) and pressing on the membrane (34).

5. A shut-off device (1) according to Claim 3, wherein the first duct (12) is in relation with the electrovalve (2) via the control means.

6. A shut-off device (1) according to any one of Claims 3 to 5, wherein the control means comprise:
- first ducting (20) connecting the first duct (12) to the electrovalve (2), opening upstream of the non return valve (16),
- second ducting (25) connecting the first chamber (11) to the electrovalve (2),
- third ducting (24, 37) connecting the electrovalve (2) to the second chamber (38).

7. A shut-off device (1) according to Claim 6, wherein the first ducting (20) is finished off on one side by a flange (21) delimiting a cavity (19), the electrovalve pressing on the flange, the second (25) and third ducting (24, 37) opening into the cavity (19).

8. A shut-off device (1) according to Claim 7, wherein the head loss of the cavity (19) and the first ducting (20) is less than that of the third ducting (24, 37), so as to push the membrane (34), the electrovalve (2) being open.

9. A shut-off device (1) according to Claim 7, wherein when the electrovalve (2) is closed, the pressurised fluid is directed towards the second chamber (38) by means of the second and third ducting, to balance the pressure on both sides of the membrane (34).

10. A shut-off device (1) according to any one of the above Claims, wherein it comprises means to evacuate, towards the first duct (12), the fluid trapped in the second chamber (38), the first chamber (11) and the supply duct (26).

11. A shut-off device (1) according to Claim 10, wherein the evacuation means are formed of ducting (30, 32, 39) connecting the chamber (38) to the first duct (12) fitted with a valve (28) preventing the passage of pressurised fluid from the first duct (12) to the chamber (38) during filling.

12. A shut-off device (1) according to Claim 11, wherein the valve (28) is actuated by the build up of pressure contained in the second chamber (38), the first chamber (11) and the supply duct (26).

13. A shut-off device (1) according to any one of the above Claims, wherein the force created by the supply pressure inside the first duct (12) is greater than that supplied by the spring (36).

14. A shut-off device (1) according to Claim 13, wherein during filling, the force created by the supply pressure inside the first duct (12) is greater than the closing force of the non return valve (16, 17) on the tank side.

15. A shut-off device (1) according to Claim 14, wherein the force exerted on the valve (28) is greater than the force supplied by the pressure in the cavity (38) during the filling phase.
